# EUROPEAN PATENT APPLICATION

(11) **EP 3 167 843 A1**
(43) Date of publication of application: **17.05.2017**
(21) Application number: 16197597.4
(22) Date of filing: 07.11.2016
(51) Int. Cl.: A61C 17/06

(54) **ORAL CAVITY FLUID EXTRACTION SYSTEM AND BITE BLOCK**

(30) Priority: 11.11.2015 SE 1551457
(71) Applicant: Lottago AB, 590 51 Vikingstad (SE)
(72) Inventor: CARLHEIM, Liselotte, 590 51 Vikingstad (SE)
(74) Representative: Zacco Sweden AB

(57) **Abstract**

The present disclosure relates to arrangements and systems for use in dental treatment. The disclosure proposes a bite block (20) for use in an oral cavity during dental treatment, wherein a fluid extracting suction is used for extracting saliva and/or debris from the oral cavity. The bite block (20) comprises a pair of bite pads (201) arranged to support a relative position of a patient's jaws via engagement with upper and lower molars on a first side of the patient's mouth. The bite block (20) further comprises suction receiving means (205) comprising a cavity (207) arranged between the pair of bite pads (201) and adapted to receive the suction hose. The suction receiving means (205) also comprises fixating means (209) adapted to fixate a position of the suction nozzle in relation to the bite block (20). The present disclosure also relates to oral cavity fluid extraction systems comprising the inventive bite block.

## Description

### TECHNICAL FIELD

The present disclosure relates to arrangements and systems for use in dental treatment. In particular the disclosure relates to a bite block and an oral cavity fluid extraction system.

### BACKGROUND

In dentistry today, there is an ever increasing demand to be able to receive and treat more and more patients, and to reduce the queues where future patients are waiting for treatment. In addition to providing the same, or more, amount of treatment in less time than today, there is also an additional need to be able to work with new methods.

Today, public dental care typically works quite traditionally, with a dentist and a dental assistant working side by side. As the methods of dentistry develop, the dental assistant is expected to perform more and more of the tasks traditionally performed by the dentist. In order to meet the increasing number of patients per professional, the dentists need to be freed from as many tasks as possible in order to free him or her for tasks that only the dentist has training to do.

One particular problem that is affecting the work of both the dentists and the dentist assistants is operating the suctions. There are two types of suctions; the saliva ejector and the high volume suction. The saliva ejector is used to suck saliva out of the mouth. The high volume suction is adapted to be able to provide a stronger suction than the saliva ejector, which is needed to e.g. collect debris. The high volume suction is typically operated by the dental assistant, but may sometimes be operated by the dentist. The operation of the suctions typically forces the dentists and the dentist assistants to work in difficult and strenuous postures, which may lead to problems in the shoulders, neck, arms and back. Another group in the dentistry profession that suffer from posture issues associated with the operation of a suction is the dental hygienist. The dental hygienist typically sits placed behind the head of the patient, holding the ultra sound in one hand and the suction in the other, which often results in aching arms, elbows, neck and back.

Another important aspect in the dentistry profession is patient comfort. The longer a patient has to wait for a procedure to finish, the harder it will be for the patient to remain relaxed. If the patient also has to keep his or her mouth open for extended periods of time, fatigue may become an additional issue that reduces patient comfort. There is thus a need in the art for arrangements and systems that enable a reduction in treatment duration, improves patient comfort, frees up professionals to perform more tasks, and reduces or eliminates fatigue of the professional(s) during treatment.

### SUMMARY

An object of the present disclosure is to provide arrangements and systems for use in dental treatment which seek to mitigate, alleviate, or eliminate one or more of the above-identified deficiencies in the art and disadvantages singly or in any combination and to provide a bite block and an oral cavity fluid extraction system for use in an oral cavity during dental treatment.

The disclosure proposes a bite block for use in an oral cavity during dental treatment, wherein a fluid extracting suction is used for extracting saliva and/or debris from the oral cavity. The suction has a suction hose and a suction nozzle. The bite block comprises a pair of bite pads mirror-symmetrically arranged about a centreline of the bite block and at an acute angle with respect to each other. The pair of bite pads is arranged to support a relative position of a patient's jaws via engagement with upper and lower molars on a first side of the patient's mouth. The bite block further comprises suction receiving means. The suction receiving means comprises a cavity arranged between the pair of bite pads. The cavity is adapted to receive the suction hose. The suction receiving means also comprises fixating means adapted to fixate a position of the suction nozzle in relation to the bite block. The bite block additionally comprises at least one distancing member arranged to provide a distance between at least one anatomic part of the patient's mouth and the suction nozzle, when fixated by the fixating means.

The disclosed bite block eliminates a need to manually hold a suction in the patients mouth during dental treatment, thereby freeing up human resources. Each professional will be able to work without assistance for a larger portion of the day. The bite block also alleviates much of the stress associated with poor posture in relation to operating a suction in a patients mouth. Not needing anyone to hold the suction improves work efficiency, which reduces treatment time and improves accuracy of the dental treatment. The time associated with traditional removal of tartar can be reduced by at least 25%. The fixating means fixates the suction nozzle in relation to the bite block and the at least one distancing member prevents the suction nozzle to get sucked into an anatomic part of the patients mouth, e.g. the patient's tongue or cheek, thereby relieving a lot of the stress usually associated with dental treatment. The fixating means further prevents unwanted movement of the suction nozzle along the suction hose, such as sliding deeper into the patient's mouth or sliding back out of the patient's mouth.

According to some aspects, the cavity represents a cylindrical bushing having an aperture extending longitudinally in an essentially straight line along a side of the cylindrical bushing such that the cylindrical bushing has a C-shaped cross-section, the aperture being narrower than a diameter of the cylindrical bushing.

This facilitates quick and easy insertion and removal of the suction in the bite block, as the suction hose can be easily received by, and removed from, the cavity.

According to some aspects, the cylindrical bushing has edges at a tip of the C-shaped cross section and running along the aperture. The edges along the aperture are arranged to hold the received suction hose inside the cylindrical bushing when embracing the received suction hose.

The embrace applies pressure against the received suction hose. The pressure increases the frictional force when the suction hose tries to move back or forth along the cylindrical bushing, the frictional force thereby fixating the position of the suction hose in relation to the bite block. Since the suction nozzle is attached at one end of the suction hose, the embrace of the edges implicitly fixates the suction nozzle in relation to the bite block. The pressure of the embrace also restricts the hose from moving out of the aperture, i.e. becoming detached.

According to some aspects, the fixating means comprises a partially circular, C-shaped fixating clutch having an inner diameter equal or greater than a diameter of the suction hose and less than a greatest diameter of the suction nozzle.

This restricts movement of the suction hose in one direction, since the suction nozzle will be caught by the narrower diameter of the fixating clutch. Removal of the bite block can be simplified by pulling gently on the suction hose. The suction nozzle will be caught by the narrower diameter of the fixating clutch and pull the rest of the bite block with it.

According to some aspects, the fixating means is formed by said cavity, adapted to receive the suction hose.

The cavity then functions as a snap lock, which greatly simplifies and speeds up insertion and removal of the suction into or out of the suction receiving means.

According to some aspects, the at least one distancing member is a wing-shaped spacer having an orthogonal direction to a jaw supporting plane formed by the bite pads and directed outwards from a centre point of the bite block.

The wing-shaped spacer can be made part of the bite block, e.g. via form injection. The wing-shape of the spacer provides a smooth contact with the anatomical part of the patient's mouth that is to be kept away from the suction nozzle.

According to some aspects, the at least one distancing member comprises a pair of wing-shaped spacers, mirror-symmetrically arranged in relation to said centreline of the bite block. The pair of wing-shaped spacers are further arranged to flank the suction receiving means and to press against the patient's tongue or cheek, thereby providing respective distances between the nozzle of the suction and the patient's tongue and cheek.

The patient's tongue and cheek are the most likely to get caught in the suction nozzle during operation of the suction. The pair of wing-shaped spacers prevents the patient's tongue and cheek from getting drawn into the suction nozzle during operation. Furthermore, a mirror-symmetrical arrangement of the wing-shaped spacers enables the bite block to be used on both sides of the patient's mouth.

According to some aspects, the bite block further comprises a fan-shaped distancing element lying in a plane parallel to a plane comprising the acute angle between the pair of bite pads, and wherein a convex edge of the fan-shape is arranged to provide a distance between the suction nozzle and the patient's buccal mucosa by pressing against the buccal mucosa.

For some patients, particularly older patients, the buccal mucosa is less firm than for an average patient and there is a risk of having the buccal mucosa pulled into the suction nozzle. The fan-shaped distancing element provides a good fit with the typical shape of the buccal mucosa, while at the same time minimizing the amount of material used and providing the dentist with maximal space and accessibility to the patient's mouth. The convex edge provides a smooth contact with the buccal mucosa.

The disclosure also relates to an oral cavity fluid extraction system for use in dental treatment for extracting saliva and/or debris from the oral cavity. The system comprises a fluid extraction arrangement comprising a suction having a suction hose and a suction nozzle, and a bite block comprising a pair of bite pads. The suction is mounted in suction receiving means arranged between the pair of bite pads in the bite block. The bite block comprises at least one distancing member arranged to provide a distance between the suction nozzle and at least one anatomic part of the patient's mouth.

The disclosed system has all the benefits associated with the bite block, as described above.

According to some aspects, the fluid extraction arrangement further comprises a suction interface. The suction interface has a first opening arranged to be attached to the suction hose and a second opening arranged to receive a fluid suction. The suction interface also comprises a channel between the first and second opening adapted to provide fluid communication between the suction nozzle and the fluid suction.

The suction interface enables the bite block to function within any type of oral cavity fluid extraction system. An additional benefit is that the suction receiving means can be adapted to receive the hose of a first suction, with the suction interface enabling the use of a second suction. This flexibility enables alternating between having a saliva ejector and a high volume suction mounted in the suction receiving means.

### BRIEF DESCRIPTION OF THE DRAWINGS

The foregoing will be apparent from the following more particular description of the example embodiments, as illustrated in the accompanying drawings in which like reference characters refer to the same parts throughout the different views. The drawings are not necessarily to scale, emphasis instead being placed upon illustrating the example embodiments.
Figure 1 illustrates a bite block according to the prior art;
Figure 2a illustrates an embodiment of the inventive bite block;
Figure 2b illustrates another embodiment of the inventive bite block;
Figures 3a-c illustrate exploded views of a bite block from different perspectives; and
Figure 4 illustrates an oral cavity fluid extraction system according to the present disclosure.

### DETAILED DESCRIPTION

Aspects of the present disclosure will be described more fully hereinafter with reference to the accompanying drawings. The devices and systems disclosed herein can, however, be realized in many different forms and should not be construed as being limited to the aspects set forth herein. Like numbers in the drawings refer to like elements throughout.

The terminology used herein is for the purpose of describing particular aspects of the disclosure only, and is not intended to limit the invention. As used herein, the singular forms "a", "an" and "the" are intended to include the plural forms as well, unless the context clearly indicates otherwise.

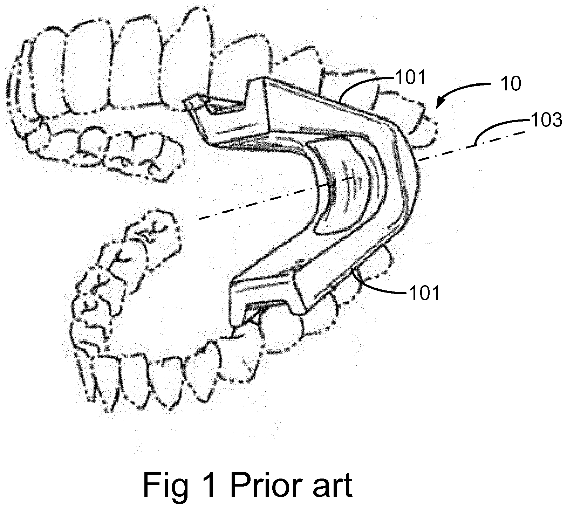

Figure 1 illustrates a bite block 10 according to the prior art. The bite block 10 comprises a pair of bite pads 101 mirror-symmetrically arranged about a centreline 103 of the bite block 10 and at an acute angle with respect to each other. The idea of the bite block 10 is to alleviate a patent's effort of keeping the mouth open. To this end, the pair of bite pads 101 are arranged to support a relative position of the patient's jaws via engagement with upper and lower molars on a first side of the patient's mouth. The bite block 10 serves as a wedge between the patient's jaws, which enables the dentist to work for longer duration with various dental treatment tools and suctions.

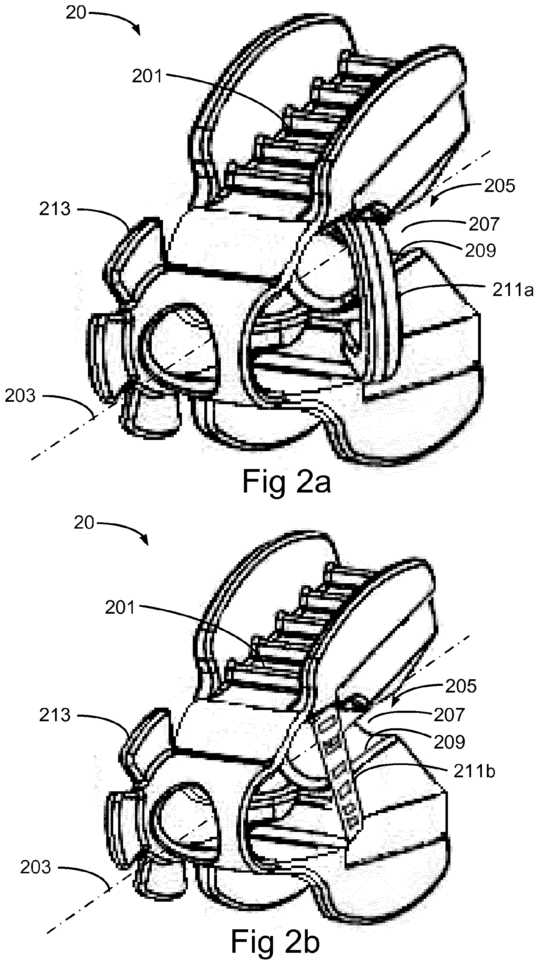

Figure 2a illustrates an aspect of a bite block 20 according to the present disclosure. The bite block 20 is primarily intended for use in an oral cavity during dental treatment, wherein a fluid extracting suction is used for extracting saliva and/or debris from the oral cavity, the suction having a suction hose and a suction nozzle. The bite block 20 comprises a pair of bite pads 201 mirror-symmetrically arranged about a centreline 203 of the bite block 20 and at an acute angle with respect to each other. The pair of bite pads 201 are arranged to support a relative position of a patient's jaws via engagement with upper and lower molars on a first side of the patient's mouth. According to some aspects, each bite pad 201 is flanked by a pair of walls with convex edges. The walls assist in keeping the patient's teeth on the bite block 20 by restricting sideways movement of the teeth with respect to the bite blocks 201. The convex curvature of the walls eliminates sharp edges and enables a good anatomical fit with a natural curvature of the of the patient's oral cavity. According to some aspects, the bite pads 201 comprise friction increasing means arranged to increase the friction between the patient's molars and the bite pads 201. According to some further aspects, the friction increasing means comprises ridges. The ridges prevent the bite pads 201 from moving in relation to the molars by engagement with irregularities of the molars and between the molars. According to some aspects, the friction increasing means comprises an elastic material arranged at a surface of the bite pads 201 adapted to receive the patient's molars. The elastic material is arranged to deform in response to pressure from the patient's molars such that the resulting elastic deformation increases friction by slightly gripping about a contact surface of the patient's molars.

The bite block 20 additionally comprises suction receiving means 205. The main idea of having the bite block comprising suction receiving means is to free the professional(s) from having to hold the suction. This enables the professional(s) to work more effectively and thereby reduce treatment duration, which is not only cost-effective, but also reduces patient discomfort associated with treatment duration. With the arm previously holding the suction freed, the professional(s) are now able to perform more complex tasks and work with higher precision, e.g. when performing dental fillings or applying fissure sealants. An additional benefit is that the long term stress and confining poor posture associated with having to hold a suction is significantly reduced.

The suction is received by the suction receiving means 205 via a cavity 207 arranged between the pair of bite pads 201, wherein the cavity 207 is adapted to receive the suction hose. That is, a part of the suction hose is received by the cavity 207. According to some aspects, the cavity 207 represents a cylindrical bushing 207. The cylindrical shape is ideal for receiving the suction hose, but other shapes are also within the scope of the invention. The suction hose can be inserted from one end of the cylindrical bushing 207. According to some aspects, the suction hose can be fixated when mounted in the cylindrical bushing 207 by applying pressure on the bite pads 201, e.g. by having the patient applying pressure with the jaws. Preferably, the cavity 207 represents a cylindrical bushing 207 having an aperture extending longitudinally in an essentially straight line along a side of the cylindrical bushing 207 such that the cylindrical bushing 207 has a C-shaped cross-section, the aperture being narrower than a diameter of the cylindrical bushing 207. The aperture facilitates a lateral insertion of the suction hose into the cavity 207, which is both quick and convenient.

The suction receiving means 205 further comprises fixating means 209 adapted to fixate a position of the suction nozzle in relation to the bite block 20. By doing so, unwanted movement of the suction nozzle, e.g. the suction becoming detached from the bite block or the suction nozzle shifting position in the patient's mouth, is prevented. According to some aspects, the cylindrical bushing 207 has edges at a tip of the C-shaped cross section and running along the aperture, the edges along the aperture being arranged to hold the received hose inside the cylindrical bushing when embracing the received hose. The edges are defined by the shape of the aperture. The edges are slightly flexible, enabling the suction hose to be received in the cylindrical bushing by pressing on the suction hose when aligned with the aperture. The slightly flexible edges opens the aperture in response to the pressure from the suction hose, and when the suction hose is received by the cylindrical bushing, the flexible edges will try to retain the non-flexed state, thereby pressing against the received suction hose in an embrace. According to some aspects, the edges taper off, the tapering increasing the flexibility of the edges. According to some aspects, the edges are slightly rounded in order to prevent wear and tear from sharp edges on the suction hose. According to some aspects, the edges comprise a high friction texture. The high friction texture improves the grip of the embrace on the suction hose. The embrace of the edges prevents a received suction hose from becoming detached. The embrace of the edges further prevents a received suction hose from moving along the longitudinal direction of the cylindrical bushing due to friction. According to a further aspect, the fixating means 209 is formed by said cavity 207, adapted to receive the suction hose. By making the diameter of the cylindrical bushing match the diameter of the suction hose, the suction hose is restricted to move along the longitudinal direction of the cylindrical bushing due to friction. The suction nozzle can thereby be fixated at desired position in the patient's oral cavity by adjusting which part of the hose that is received by the cavity. The function of the fixating means 209 can be further extended by comprising a partially circular, C-shaped fixating clutch having an inner diameter equal or greater than a diameter of the suction hose and less than a greatest diameter of the suction nozzle. This further restricts the suction hose and nozzle from sliding out of the cavity, since the greater diameter of the suction nozzle will be caught by the C-shaped fixating clutch. This can also be used to assist in the extraction of the bite block 20 from the oral cavity by gently pulling on the suction hose, since the bite block 20 is effectively limited by the diameter of the suction nozzle to move in any other direction than that of the pulling direction.

Since every patient has a unique oral cavity and the suction nozzle getting stuck to an anatomical part of the patient's mouth might become a problem, leading to both patient discomfort and reduced sucking efficiency, the bite block 20 also comprises at least one distancing member 211a. The distancing member 211a is arranged to provide a distance between at least one anatomic part of the patient's mouth and the suction nozzle, when fixated by the fixating means 209. By doing this, the distancing member 211a keeps the anatomic part(s) in risk of getting pulled into the suction nozzle at a safe distance from the suction nozzle. In one preferred option, the distancing member is a wing-shaped spacer 211a, since the curved shape is smooth and facilitates a cheap and efficient manufacturing process, such as injection moulding. To effectively provide the necessary distance between an anatomical part of the patient's mouth and the suction nozzle, the at least one distancing member 211a has an orthogonal direction to a jaw supporting plane formed by the bite pads and directed outwards from a centre point of the bite block. According to some further aspects, the outwards direction of the at least one distancing member 211a aligns a tip of the wing-shaped spacer 211a with a plane formed by a side surface of the bite pads. This keeps the outwards extension of the wing-shaped spacer 211a to small angles, which reduces an extension of the bite block in a direction perpendicular to the jaw supporting plane. The bite block thereby becomes more compact and enables a plurality of bite blocks to be placed next to each other without significant space in between each other. The bite blocks can thereby be stored in an efficient, space saving manner. According to some aspects, the outwards extension of the wing-shaped spacer 211a is adjustable.According to some aspects, the at least one distancing member comprises a pair of wing-shaped spacers 211a, mirror-symmetrically arranged in relation to said centreline of the bite block 20. The mirror-symmetrical arrangement makes it possible to use the same bite block 20 on both sides of the patient's mouth by simple rotating the bite block 180 degrees. The pair of wing-shaped spacers 211a are further arranged to flank the suction receiving means 205 and to press against the patient's tongue or cheek, thereby providing respective distances between the nozzle of the suction and the patient's tongue and cheek. The patient's tongue and cheek are the two most common anatomical parts of the patient's mouth that may come in contact with the suction nozzle and get stuck. By having the wing-shaped spacers 211a flanking the suction means, they will always hold the tongue and cheek away from the suction nozzle, irrespective of which side of the patient's mouth the bite block is placed.

In some patients, particularly older patients, the soft tissue in the patient's oral cavity may be looser than that of the average patient. If so, the soft tissue is more susceptible to the pull of the suction and may extend far enough to get caught. To prevent this from happening, some aspects of the bite block 213 comprises a fan-shaped distancing element lying in a plane parallel to a plane comprising the acute angle between the pair of bite pads 201. A convex edge of the fan-shape is arranged to provide a distance between the suction nozzle and the patient's buccal mucosa by pressing against the buccal mucosa. The fan-shape matches the back of the patient's mouth, where the jaws begin to come together. The convex edge provides a smooth edge against the buccal mucosa. The flatness of the fan-shape keeps the amount of material needed to manufacture the fan-shaped distancing element low, while at the same time leaving as much of the oral cavity available to the dentist as possible.

Figure 2b illustrates an aspect of a bite block 20 according to the present disclosure. The bite block 20 differs from the bite block 20 illustrated in Fig. 2a in that at least one of the distancing members comprises a plurality of ribs arranged in one or more angles in a plane coinciding with a side of the bite block, the ribs forming a net. According to an aspect, the pair of symmetrically place distancing members is a pair of nets 211b. The nets 211b do not extend like the wing-shaped distancing members 211a in Fig. 2a, but instead lie flat. The bite block 20 of Fig. 2b therefore takes up less lateral space compared to the bite block 20 illustrated in Fig. 2a. The grids provided by the nets 211b are particularly effective at keeping away soft tissue that is looser than that of an average patient from the suction nozzle. This is very practical when treating many elderly patients, where this condition often manifests itself.

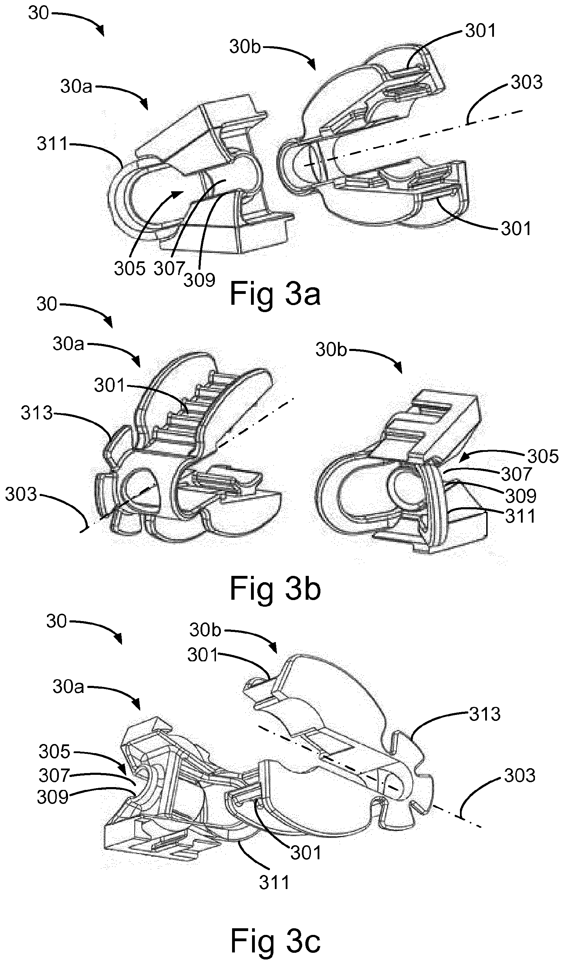

Figures 3a to 3c illustrate an exploded view of the bite block 30 of Fig 2a in a perspective view. The bite block 30 is composed of two components 30a, 30b that are joined together via a sliding mechanism, wherein a cavity on one of the components matches a protruding part of the other component, and vice versa. The sliding mechanism serves as a mechanical lock, which eliminates the need for glue or other potentially toxic agents to hold the components of the bite block together. The sliding mechanism also provides a quick and easy way of taking off or putting on the pair of bite pads 301.

Preferably, the bite block 30 is mirror-symmetrical about a plane comprising the centreline 303 and lying between the bite pads 301. This enables the bite block 30 to be used on either side of the patient's mouth, without any modifications. The side of the patient's mouth at which the bite block 30 is used can be changed by a 180 degree rotation of the bite block 30 about the centreline 303. A first component 30a of the two components 30a, 30b forms a central part 30a of the bite block 30, the central part 30a comprising the suction receiving means 305 and the two symmetrically arranged distancing members 311. The central part 30a is preferably formed as a single unit, e.g. using injection moulding or additive manufacturing. The material is preferably a hard, yet slightly elastic, material, e.g. a hard plastic or resin. According to some aspects, the material is heat tolerant, enabling the central part 30a to be disinfected using a high temperature disinfection process.

The second component 30b comprises the pair of bite pads 301 and the fan-shaped distancing element 313. The fan-shaped distancing element 313 is arranged on a convex edge of a U-shaped segment, which attaches to an end of the respective bite pads 301. The U-shaped segment additionally comprises a hole having a diameter greater or equal to a largest diameter of the suction nozzle. According to some aspects, the bite pads comprise walls flanking the bite pads. The walls are arranged to flank the patient's molars when the bite block is arranged in the patient's mouth. The bite pads also preferably have a texture facilitating increased friction between the patient's molars and the bite pads, which prevents the bite block from slipping and reduces the amount of pressure needed to keep the bite block in place. According to some aspects, the texture comprises ridges. The second component 30b is preferably made in one piece, e.g. using injection moulding or additive manufacturing. The second component 30b is preferable made in a material that is softer and more elastic than the material of the first component 30a. The softer and more elastic material facilitates the sliding mechanism that joins the first component 30a and second component 30b to form the bite block 30. A softer and more elastic material also enables the second component 30b to fit to a range of differently sized and/or shaped first components 30a. According to some aspects, the second component 30b is suitable for single use.

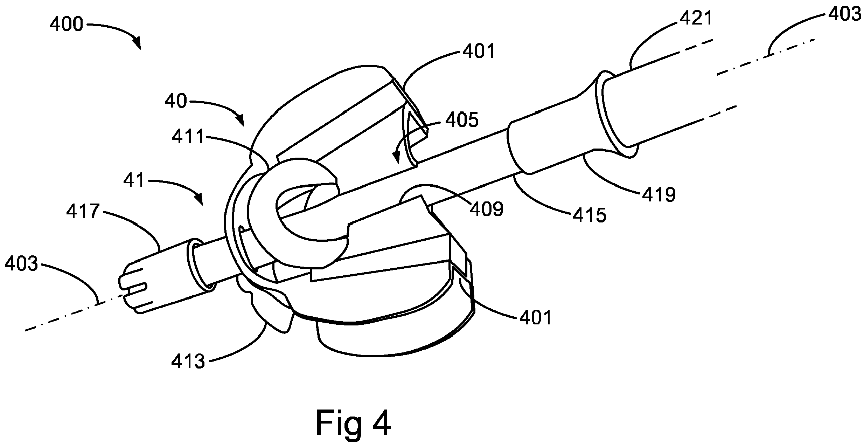

Figure 4 illustrates an oral cavity fluid extraction system 400 according to the present disclosure. The idea of the system 400 is to combine a bite block 40 according to the present disclosure with a suction 41, typically a conventional suction comprising a suction hose 415 and a suction nozzle 417. The working principle of the system 400 is illustrated using the bite block illustrated in Fig. 2a, with a conventional suction mounted in the suction receiving means 405 of the bite block 40. Since dentists typically operate with two different types of suctions, the saliva ejector and the high volume suction, it is desirable if the suction receiving means 405 is able to receive suctions with suction hoses and suction nozzles of different diameters. According to some aspects, the diameter of the cylindrical bushing matches the suction hose having the smallest diameter. The suction having the smallest diameter can then easily be inserted and removed from the cylindrical bushing via the aperture. To also be able to operate with a suction having wider hose and nozzle diameters 421, e.g. a typical high volume suction, a standard-sized suction hose 415 and nozzle 417 is provided in the cylindrical bushing. The term standard-size here means that the standard-sized suction hose 415 has a diameter that is arranged to be received by the cylindrical bushing. A suction interface 419 is then provided. The suction interface 419 has a first opening arranged to be attached to the standard-size suction hose 415 and a second opening arranged to receive a suction 421. The suction interface 419 further comprises a channel between the first and second opening adapted to provide fluid communication between the standard-size suction nozzle 417 and the suction 421 received at the second opening. The second opening can be adjusted to receive suctions of any diameter. A plurality of suction interfaces 419, each having a respective second opening adapted to receive a specific type or model of suction, may be used in combination with the bite block and the standard-sized suction hose 415 and nozzle 417. By doing so, the same bite block 40 can be used in combination with any type or model of suction. In the case of a saliva ejector and a high volume suction, a first suction interface having a second opening adapted to receive a hose of the saliva ejector and a second suction interface having a second opening adapted to receive a high volume suction enable a dental professional to freely use either type of suction in combination with the bite block or operated manually by the dental professional. By using embodiments of the disclosed system having suction interfaces, a high volume suction can quickly and easily be attached and detached, which is important for the dentist who wants to intermittently move the high volume suction around freely, e.g. when applying an acid etch, which must not be allowed to float around freely in the patent's mouth.

## Claims

1. A bite block (20, 30, 40) for use in an oral cavity during dental treatment, wherein a fluid extracting suction is used for extracting saliva and/or debris from the oral cavity, the suction having a suction hose and a suction nozzle, the bite block (20, 30, 40) comprising:
a pair of bite pads (201, 301, 401) mirror-symmetrically arranged about a centreline (203, 303, 403) of the bite block (20, 30, 40) and at an acute angle with respect to each other, the pair of bite pads (201, 301, 401) being arranged to support a relative position of a patient's jaws via engagement with upper and lower molars on a first side of the patient's mouth,
**characterized in that** the bite block (20, 30, 40) further comprises:
suction receiving means (205, 305, 405) comprising:
a cavity (207, 307) arranged between the pair of bite pads (201, 301, 401), the cavity (207, 307) being adapted to receive the suction hose,
fixating means (209, 309, 409) adapted to fixate a position of the suction nozzle in relation to the bite block (20, 30, 40); and
at least one distancing member (211a, 211b, 213, 311, 313, 411, 413) arranged to provide a distance between at least one anatomic part of the patient's mouth and the suction nozzle, when fixated by the fixating means (209, 309, 409), wherein the at least one distancing member is a wing-shaped spacer (211a, 311, 411) having an orthogonal direction to a jaw supporting plane formed by the bite pads (201, 301, 401) and directed outwards from a centre point of the bite block (20, 30, 40).

2. The bite block (20, 30, 40) according to claim 1, wherein the cavity (207, 307) represents a cylindrical bushing having an aperture extending longitudinally in an essentially straight line along a side of the cylindrical bushing such that the cylindrical bushing has a C-shaped cross-section, the aperture being narrower than a diameter of the cylindrical bushing.

3. The bite block (20, 30, 40) according to claim 2, wherein the cylindrical bushing has edges at a tip of the C-shaped cross section and running along the aperture, the edges along the aperture being arranged to hold the received suction hose inside the cylindrical bushing when embracing the received suction hose.

4. The bite block (20, 30, 40) according to any of the preceding claims, wherein the fixating means (209, 309, 409) comprises a partially circular, C-shaped fixating clutch having an inner diameter equal or greater than a diameter of the suction hose and less than a greatest diameter of the suction nozzle.

5. The bite block (20, 30, 40) according to claim 4, wherein the fixating means (209, 309, 409) is formed by said cavity (207, 307), adapted to receive the suction hose.

6. The bite block (20, 30, 40) according to any of the preceding claims, wherein the at least one distancing member comprises a pair of wing-shaped spacers (211a, 311, 411), mirror-symmetrically arranged in relation to said centreline (203, 303, 403) of the bite block (20, 30, 40), wherein the pair of wing-shaped spacers (211a, 311, 411) are further arranged to flank the suction receiving means (205, 305, 405) and to press against the patient's tongue or cheek, thereby providing respective distances between the nozzle of the suction and the patient's tongue and cheek.

7. The bite block (20, 30, 40) according to any of the preceding claims, further comprising a fan-shaped distancing element (213, 313, 413) lying in a plane parallel to a plane comprising the acute angle between the pair of bite pads (201, 301, 401), and wherein a convex edge of the fan-shape is arranged to provide a distance between the suction nozzle and the patient's buccal mucosa by pressing against the buccal mucosa.

8. An oral cavity fluid extraction system (400) for use in dental treatment for extracting saliva and/or debris from the oral cavity, the system comprising a fluid extraction arrangement comprising a suction 41 having a suction hose 415 and a suction nozzle 417, and a bite block 40 comprising a pair of bite pads 401, **characterized in, that** the suction 41 is mounted in suction receiving means 405 arranged between the pair of bite pads 401 in the bite block 40 and that the bite block 40 comprises at least one distancing member 411, 413 arranged to provide a distance between the suction nozzle 417 and at least one anatomic part of the patient's mouth, wherein the at least one distancing member is a wing-shaped spacer (211a, 311, 411) having an orthogonal direction to a jaw supporting plane formed by the bite pads (201, 301, 401) and directed outwards from a centre point of the bite block (20, 30, 40).

9. The system according to claim 8, wherein the fluid extraction arrangement further comprises a suction interface 419, the suction interface 419 having a first opening arranged to be attached to the suction hose 415 and a second opening arranged to receive a fluid suction 421, the suction interface comprising a channel between the first and second opening adapted to provide fluid communication between the suction nozzle 417 and the fluid suction 421.
